(19) **Europäisches Patentamt / European Patent Office / Office européen des brevets**

(11) **EP 3 508 073 B1**

(12) **EUROPEAN PATENT SPECIFICATION**

(45) Date of publication and mention
of the grant of the patent:
**16.02.2022   Bulletin 2022/07**

(21) Application number: **17846860.9**

(22) Date of filing: **07.08.2017**

(51) International Patent Classification (IPC):
**A23L 21/12** *(2016.01)*      **A23L 29/30** *(2016.01)*

(52) Cooperative Patent Classification (CPC):
**A23L 21/12; A23L 29/30**

(86) International application number:
**PCT/KR2017/008489**

(87) International publication number:
**WO 2018/043935 (08.03.2018 Gazette 2018/10)**

(54) **FRUIT JAM COMPRISING ALLULOSE AND METHOD FOR MANUFACTURING SAME**

FRUCHTKONFITÜRE MIT ALLULOSE UND VERFAHREN ZUR HERSTELLUNG DAVON

CONFITURE DE FRUIT COMPRENANT DE L'ALLULOSE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **01.09.2016   KR 20160112501**

(43) Date of publication of application:
**10.07.2019   Bulletin 2019/28**

(73) Proprietor: **CJ Cheiljedang Corporation**
**Seoul 04560 (KR)**

(72) Inventors:
• **CHOI, Jong Min**
 **Suwon-si**
 **Gyeonggi-do 16567 (KR)**
• **KIM, Su-Jeong**
 **Suwon-si**
 **Gyeonggi-do 16509 (KR)**
• **PARK, Seung Won**
 **Yongin-si**
 **Gyeonggi-do 16894 (KR)**
• **BAK, Youn-Kyung**
 **Suwon-si**
 **Gyeonggi-do 16698 (KR)**

• **PARK, Jung Gyu**
 **Incheon 22187 (KR)**
• **BYUN, Sung Bae**
 **Sejong 30083 (KR)**
• **SHIM, Dong Seok**
 **Yongin-si**
 **Gyeonggi-do 16868 (KR)**
• **LEE, In**
 **Suwon-si**
 **Gyeonggi-do 16507 (KR)**
• **JUNG, Dong Chul**
 **Seoul 06779 (KR)**

(74) Representative: **Millburn, Julie Elizabeth et al**
**Reddie & Grose LLP**
**The White Chapel Building**
**10 Whitechapel High Street**
**London E1 8QS (GB)**

(56) References cited:
**EP-A1- 3 266 314        WO-A1-2015/015210**
**WO-A1-2015/075473     JP-A- 2014 113 059**
**JP-A- 2014 113 059       KR-A- 20120 033 282**
**KR-A- 20150 041 349     KR-A- 20150 130 323**
**KR-A- 20160 089 551**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**CROSS-REFERENCE TO RELATED APPLICATIONS**

This application claims priority under 35 U.S.C. §119 to Korean Patent Application No. 10-2016-0112501, filed on September 1, 2016, in the Korean Intellectual Property Office.

**TECHNICAL FIELD**

The following disclosure relates to a fruit jam comprising allulose and a method for preparing the same.

**BACKGROUND**

Jam is generally prepared by adding a large amount of sucrose to fruit or vegetables, followed by boiling to obtain a highly viscous gel form. Accordingly, since the jam contains a large amount of sucrose, growth of microorganisms is inhibited, and thus, storability is improved, but excessive sucrose intake increases possibilities of cavities, rapid change in blood sucrose, obesity, etc. Further, as a storage period elapses, water which is a dispersion medium contained in the gel is separated from the jam, and thus, microbial stability is reduced. In addition, since sucrose is boiled at a high temperature over a long time according to the conventional methods for preparing the same, a boil-over phenomenon occurs, and bubbles occurring therefrom remain even after cooling, resulting in deterioration of sensory properties. When multiple temperature controls are applied to prevent the boil-over phenomenon, labor and time required for preparing the jam are increased, and nutrients of fruit are destroyed and food texture is lowered.

Allulose is a C-3 epimer of D-fructose and is a natural saccharide ingredient present in trace amounts in raisins, figs, wheat, etc. It has a 70% sweetness compared to sucrose, but has 0 kcal/g of calorie, which is only 5% of the sucrose (4 kcal/g). Thus, the allulose has received attention as a sweetener substitute for sucrose. However, application of allulose to jams has not been reported.

Under these circumstances, the present inventors have made an effort to solve disadvantages of the conventional jams described above. As a result, they found that when the jam was prepared by using the allulose, the boil-over phenomenon, sensory qualities, and storage stability were improved at the time of preparing the jam, and completed the present invention.

[Related Prior Art Document]

(Patent Document 1) Korean Patent No. 10-0735865 B1

WO2015075473 relates to food and beverage products comprising allulose. JP2014113059 relates to a method for imparting a rich taste to food and drink.

**SUMMARY**

The present invention provides a fruit jam comprising allulose and a method for preparing the same.

According to the present invention, there is provided a fruit jam including a fruit and a saccharide containing allulose; wherein the allulose has an amount of 200 to 300 parts by weight based on 100 parts by weight of the fruit.

Term "fruit" of the present invention means a fruit of a woody plant that is edible, and may include without limitation as long as it is a fruit or vegetable fruit that is usable for preparing a jam. The vegetable fruit (such as strawberry, watermelon, melon, etc.) is a herbaceous cultivated plant that is edible, but treated as a fruit in the common term of the consumer. Thus, the vegetable fruit is defined as being included in the fruit of the present invention. Specifically, the fruit of the present invention includes an orange, tangerine, lemon, grapefruit, peach, apricot, grape, pear, apple, pineapple, strawberry, cranberry, blueberry, acai berry, pomegranate, banana, mango, guava, watermelon, melon, plum, kiwi, or a mixture thereof, but is not limited thereto.

The fruit of the present invention is not limited to raw material from which non-edible portions are removed from a natural fruit, and may include a concentrate or powder thereof. In addition, the fruit used in the present invention may include both the case where the fruit raw material is physically changed or the case where the ingredients included in the fruit raw material have different ingredients from the fruit raw material due to chemical change in a process (for example, the heating process) for preparing of the fruit jam of the present invention.

The allulose of the present invention may be directly extracted from natural products, chemically synthesized, or prepared by biological methods, but is not limited thereto.

The allulose of the present invention may have an amount of 200-250 or 250-300 parts by weight.

The fruit jam of the present invention may further include at least one sweetener other than sucrose, as a saccharide ingredient. The sweetener includes, but is not limited to, known sweeteners (for example, monosaccharides, disaccharides, oligosaccharide, sugar alcohols, and high sweeteners). Specifically, the monosaccharide may be, for example, arabinose, xylose, fructose, tagatose, allose, glucose or galactose, and the disaccharide is a saccharide in which two monosaccharides are combined, such as lactose, maltose, trehalose, turanose, or cellobiose.

The oligosaccharide is a saccharide in which three monosaccharides or more are combined, and may be, for example, fructooligosaccharide, isomaltooligosaccharide, xylooligosaccharide, gentio oligosaccharide, maltooligosaccharide or galactooligosaccharide. The sugar alcohol is a substance formed by reducing a carbonyl group of the saccharide, and may be, for example, erythritol, xylitol, arabitol, mannitol, sorbitol, maltitol or lactitol. The high sweetener is a substance having a sweetness ten times or more than that of sucrose, and may be, for example, aspartame, acesulfame K, rebaudioside A or sucralose. However, these substances are not limited thereto.

The fruit jam may further include pectin, an organic acid or a combination thereof. Specifically, the fruit jam of the present invention may have an acidity of pH 2.0 to 5.0, pH 2.5 to 4.5, or pH 3.0 to 4.0, and may have an acidity of 0.1 to 2.0%, 0.2 to 1.5%, or 0.2 to 1.0%. The fruit jam of the present invention may further include an organic acid (for example, citric acid, malic acid, tartaric acid, oxalic acid or acetic acid) for adjusting pH or acidity, if necessary.

Further, the fruit jam of the present invention may further include a thickening agent (for example, a polysaccharide such as pectin, gelatin, gum, etc.).

The fruit jam of the present invention may contain various other ingredients that are capable of being added to other compositions for eating and drinking in addition to the above-described ingredients.

The fruit jam of the present invention may not include sucrose. This sucrose means sucrose added from the outside except for sucrose included in the fruit or sucrose generated from a fruit during a process for preparing a fruit jam.

The fruit jam of the present invention may have a hardness of 10 to 80 gf and may have a hardness of 10 to 70 gf, 10 to 50 gf, 15 to 80 gf, 15 to 70 gf or 15 to 50 gf.

The fruit jam of the present invention may have a spreadability of 0.5 to 3.0 △g/△sec, and specifically, 0.5 to 2.8 △g/△sec, 0.5 to 2.0 △g/△sec or 0.8 to 2.0 △g/△sec.

According to another exemplary embodiment of the present invention, there is provided a method for preparing a fruit jam including (a) contacting a fruit with saccharide containing allulose in an amount of 200 to 300 parts by weight based on 100 parts by weight of the fruit; and (b) heating the product of step (a).

The method may not include contacting the fruit with sucrose. As demonstrated in the following Examples, the fruit jam may be prepared by replacing the sucrose with the allulose by the preparation method of the present invention. The fruit jam prepared by the preparation method of the present invention may reduce a boil-over phenomenon and a syneresis, while having similar sensory properties to the conventional jam prepared by using sucrose.

The method for preparing a fruit jam according to the present invention is described in detail as follows.

First, a specific fruit is selected and washed with water, and non-edible portions (for example, stem end, skin or seed) are removed and then crushed. A saccharide containing allulose is added at a specific weight ratio with respect to a weight ratio of the crushed fruit, followed by mixing and heating for a predetermined time, and then cooling at room temperature to prepare the fruit jam.

The heating of the present invention may be performed by any known heating method. As a non-limiting example, the heating may be performed for 1 to 10 minutes using a 500 to 1000 W microwave oven or for 5 to 30 minutes using a gas range.

According to still another exemplary embodiment of the present invention, there is provided a method for reducing bubbles of a fruit jam including: (a) contacting a fruit with saccharide containing allulose; and (b) heating the product of step (a); wherein the allulose has an amount of 200 to 300 parts by weight based on 100 parts by weight of the fruit at step (a).

Since the method for preparing a fruit jam of the present invention is able to use the above-described contents described in connection with the fruit jam as they are, the overlapped description between these two matters is omitted in order to avoid excessive complexity of the present specification.

When comparing the fruit jam of the present invention with the conventional fruit jams prepared by adding sucrose, or sucrose-free fruit jams prepared by using sugar alcohol instead of the sucrose, the fruit jam of the present invention is not prepared by simply replacing the sucrose or the sugar alcohol with the allulose. Those skilled in the art may mix the allulose with natural fruits, but they cannot easily assume how physical properties (pH, acidity, viscosity, flowability and spreadability) of the allulose fruit jam will change due to transformations of the ingredients included in the fruit during the preparation process, and in particular, they cannot easily assume how the degree of the boil-over phenomenon and storage stability will change when preparing the fruit jam using the allulose.

In the present invention, by mixing the allulose with the natural fruit at various ratios, and through an excessive number of repeated experiments, it was possible to complete the allulose fruit jam capable of maintaining a similar level of physical properties to the conventional fruit jams prepared by using the sucrose, preventing nutrient destruction of the fruit and deterioration of food texture while minimizing the boil-over phenomenon and the syneresis.

Effect of the present invention

The fruit jam prepared by using the allulose of the present invention is convenient to prepare because the boil-over phenomenon and bubble occurrence are minimized during preparation as compared to the conventional fruit jams prepared by using sucrose. Further, the sensory quality may be improved, the change of moisture content may be reduced, and the storage stability may be increased, thereby extending the shelf life. In addition, the calorie may be very low, the spreadability may be good, and soft and moist food texture may be maintained, and thus, the sensory quality may be excellent.

## BRIEF DESCRIPTION OF THE DRAWINGS

FIG. 1 is a graph showing hardness and spreadability as physical properties of a fruit jam of the present invention.
FIG. 2 is a graph showing the hardness and spreadability of the fruit jam of the present invention when only sucrose is included.
FIG. 3 is a graph showing the hardness and spreadability of the fruit jam of the present invention when allulose instead of the sucrose is included.
FIG. 4 is a graph of moisture residual rate according to storage periods (0 Day, 3 Day, 7 Day, 16 Day and 30 Day) to show storage stability of the fruit jam of the present invention.

## DETAILED DESCRIPTION OF EMBODIMENTS

Hereinafter, Examples, etc., of the present invention will be described in detail to help the understanding of the present invention. However, the following Examples according to the present invention may be modified into various other embodiments, and should not be interpreted as limiting the scope of the present invention. These Examples of the present invention are provided so that those skilled in the art may more thoroughly understand the present invention.

Example 1. Preparation of fruit jam

Strawberries were prepared as fruits and washed with water, and non-edible portions (stem end, etc.) were removed therefrom. Then, the remaining portions were crushed using a household blender (Vitamix corp., VM0127). After sucrose or allulose was added to the crushed strawberries in a mixing ratio as shown in Table 1 below, each mixture was stored and mixed in a 500 ml glass bottle, heated for 5.5 minutes using a 700 W microwave oven (LG, MM-M301), and cooled for 12 hours at room temperature, thereby preparing a strawberry jam.

[Table 1]

| Classification | Strawberry (g) | Sucrose (g) | Allulose (g) | Saccharide content relative to strawberry (wt %) |
|---|---|---|---|---|
| Comparative Example 1 | 100.0 | 100.0 | | 100 |
| Reference Experimental Example 1 | 160.0 | | 40.0 | 25 |
| Reference Experimental Example 2 | 133.3 | | 66.7 | 50 |
| Reference Experimental Example 3 | 100.0 | | 100.0 | 100 |
| Experimental Example 4 | 66.7 | | 133.3 | 200 |
| Experimental Example 5 | 50.0 | | 150.0 | 300 |

Example 2. Measurement of boil-over when preparing jam

The boil-over phenomenon was observed in the process for preparing a jam of Example 1 above, and a height of bubbles (bubble height) and an amount of bubbles (bubble amount) occurring in the process were measured. The bubble height means a value obtained by subtracting a jam height contained in the container before heating from the maximum height of the bubbles.

As a result, it was confirmed that the bubble height and bubble amount were reduced as an amount in which the allulose was added was increased with respect to the weight of strawberries. Further, Reference Experimental Example 3 in which the same amount of allulose as the sucrose of Comparative Example 1 was added, showed a bubble occurrence effect reduced by about 10% as compared to Comparative Example 1. Thus, it was confirmed that when the jam was prepared by adding the allulose, occurrence of the bubbles was reduced as compared to the jam prepared by using sucrose (Table 2). Therefore, it could be appreciated that by using the allulose instead of sucrose at the time of preparation of the jam, it was possible to reduce the occurrence of bubbles, which facilitates the preparation of jam, and to reduce occurrence of voids caused by the bubbles after cooling.

[Table 2]

| Classification | Bubble occurrence amount | | | | |
|---|---|---|---|---|---|
| | Base area ($cm^2$) | Jam height before heating (mm) | Bubble maximum height (mm) | Bubble height (mm) | Bubble amount ($cm^3$) |
| Comparative Example 1 | 136.8 | 18.0 | 163.0 | 145.0 | 1,984.3 |
| Reference Experimental Example 1 | 136.8 | 13.0 | 161.0 | 148.0 | 2,025.3 |
| Reference Experimental Example 2 | 136.8 | 14.0 | 153.0 | 139.0 | 1,902.2 |
| Reference Experimental Example 3 | 136.8 | 18.0 | 149.0 | 131.0 | 1,792.7 |
| Experimental Example 4 | 136.8 | 29.0 | 139.0 | 110.0 | 1,505.3 |
| Experimental Example 5 | 136.8 | 40.0 | 138.0 | 98.0 | 1,341.1 |

Example 3. Measurement of physical properties (pH, acidity and spreadability) of allulose jam

3-1. Measurement of pH

10 g of each of Comparative Example 1 and Reference Experimental Examples 1 to 3 and Experimental examples 4 and 5 was taken and put in a beaker, and distilled water was added thereto to prepare a 10% (w/w) aqueous solution. Each aqueous solution was filtered using a filter paper (Whatman), and pH of the filtered solution was measured using a digital pH meter (Mettler Toledo, Seven Compact with InLab No.1, 150 mm x 10).

As a result, there was no significant difference in the pH between Comparative Example, Reference Examples and Experimental Examples, and the pH was maintained at 3 to 4, as in commonly distributed jams (Table 3).

[Table 3]

| Classification | Compar. Example 1 | Reference Exper. Example 1 | Reference Exper. Example 2 | Reference Exper. Example 3 | Exper. Example 4 | Exper. Example 5 |
|---|---|---|---|---|---|---|
| pH | 3.2 | 3.2 | 3.2 | 3.3 | 3.4 | 3.5 |

3-2. Measurement of acidity

The acidity was measured using an alkali titration method. 1 g of each of Comparative Example 1 and Reference Experimental Examples 1 to 3 and Experimental Examples 4 and 5 was taken and put in a beaker, and distilled water was added thereto to prepare a 100-fold diluted aqueous solution (unit: %(w/w)). To the prepared aqueous solution, 0.1N NaOH (purchased from Daejung Chemicals & Metals Co., Ltd.) was added to measure a consumption amount of 0.1N NaOH by titrating until the pH reached 8.2 to 8.3. From the measured values, the acidity of each sample was represented by the following Equation (1) based on the amount of citric acid:

$$\text{Acidity (\%)} = V \times F \times A \times D \times 1/S \times 100 \qquad \text{[Equation (1)]}$$

In the above Equation, each variable is as follows:

V: Consumption amount (mL) of 0.1N NaOH,
F: Titer of 0.1N NaOH
A: Citric acid coefficient 0.0064
D: Dilution factor, S: Collection amount of sample (mL)

As a result, the acidity of the jam prepared by using the allulose was not significantly different from the acidity of the jam prepared by using the sucrose, and maintained to be 2% or less as in the commonly distributed jams (Table 4).

[Table 4]

| Classification | Compar. Example 1 | Reference Exper. Example 1 | Reference Exper. Example 2 | Reference Exper. Example 3 | Exper. Example 4 | Exper. Example 5 |
|---|---|---|---|---|---|---|
| Acidity | 0.75% | 1.54% | 1.21% | 0.73% | 0.47% | 0.28% |

3-3. Hardness and spreadability

The hardness and spreadability of each of Comparative Example 1 and Reference Experimental Examples 1 to 3 and Experimental Examples 4 and 5 were measured using a food texture analyzer (Stable Micro Systems, Taxt Plus). Analysis conditions of the food texture analyzer are shown in Table 5 below.

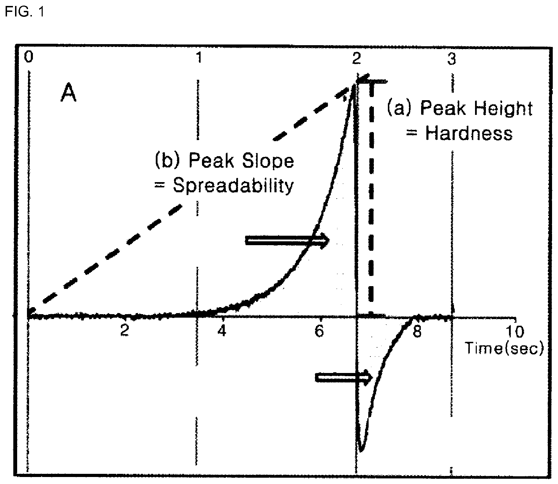

Specifically, each sample of Comparative Example 1 and Reference Experimental Examples 1 to 3 and Experimental Examples 4 and 5 were stored in the same volume in the sample holder of the food texture analyzer so that there was no space. Then, a probe (TTC SPREADABILITY RIG) located at the same height (30 mm) from each sample surface of Comparative Example 1 and Reference Experimental Examples 1 to 3 and Experimental Examples 4 and 5 stored in the sample holder was moved at a constant force and speed (Test Speed and Post Test Speed 1.0 mm/sec) to apply pressure up to a depth of 70% from the point of contact with the sample surface. Here, the maximum intensity of the force in which the probe compressed the sample was regarded as a hardness (force), which is shown as the maximum peak height in FIG. 1. Further, a ratio of a resistance value occurring when the sample was continuously compressed is defined as a spreadability, which is shown as the slope of the peak ($\Delta g/\Delta sec$) in FIG. 1. As the hardness value (gf) is higher, the sample becomes hard, and as the value of the spreadability [Gradient (g/sec)] is lower, the spreadability becomes excellent since resistance is low.

[Table 5]

| Test mode | Compression |
|---|---|
| Probe | TTC SPREADABILITY RIG |
| Test speed | 1.0 mm/sec |
| Post-test speed | 1.0 mm/sec |
| Strain | 70% |
| Height | 30 mm |

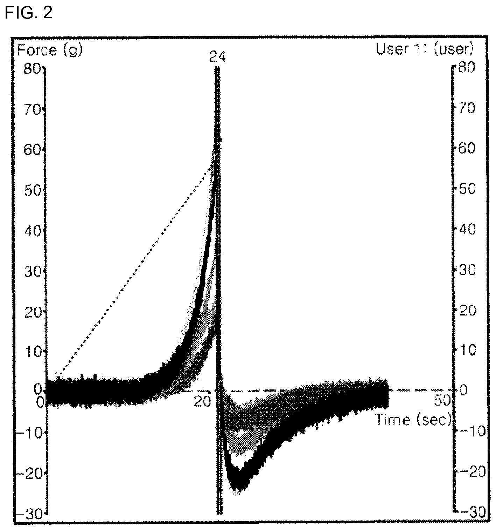

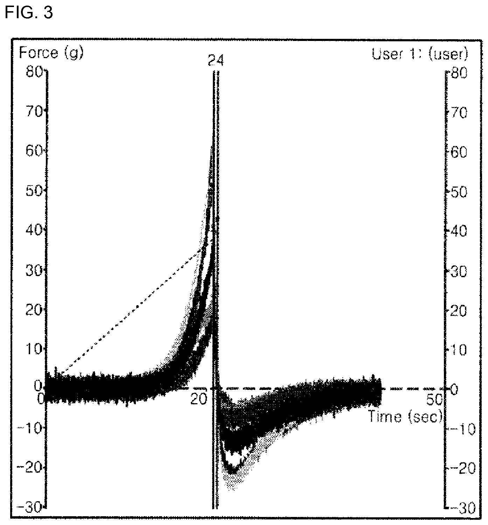

As a result, Reference Experiment Example 3 for a jam which was prepared by using the same amount of allulose as the sucrose of Comparative Example 1, showed lower hardness and spreadability values than those of Comparative Example 1. It was confirmed that Reference Examples 3 and 4, and Experimental Examples 4 and 5 showed equal or higher hardness and spreadability even when comparing with commercially available products (Commercial Product 1: strawberry jam from Ottogi Co., Ltd.; Product 2: strawberry jam from Bokumjari Co., Ltd.) (Table 6, FIGS. 2 and 3).

In detail, in Comparative Example 1, the maximum value of the peak of FIG. 2, that is, the hardness was found to be 59.6, whereas in Reference Experimental Example 3, the maximum value of the peak of FIG. 3 was found to be 38.0. Thus, it was confirmed that the fruit jam prepared by using the same amount of allulose as the sucrose of the conventional fruit jam prepared by using the sucrose, had a relatively low hardness and a soft food texture. In addition, in Comparative Example 1, the peak slope of FIG. 2, that is, the spreadability was found to be 2.9, whereas in Reference Experimental Example 3, the peak slope of FIG. 3 was found to be 1.8. Thus, it was confirmed that the fruit jam prepared by using the same amount of allulose as the sucrose of the conventional fruit jam prepared by using the sucrose, had a low resistance value, resulting in improvement of the spreadability.

[Table 6]

| Classification | Compar. Example 1 | product 1 | product 2 | RefExper. Example 1 | RefExper. Example 2 | RefExper. Example 3 | Exper. Example 4 | Exper. Example 5 |
|---|---|---|---|---|---|---|---|---|
| Hardness (gf) | 59.6 | 23.1 | 26.3 | 76.6 | 67.8 | 38.0 | 21.9 | 16.2 |
| Spreadability ($\Delta$g/$\Delta$sec) | 2.9 | 1.1 | 1.9 | 3.5 | 2.7 | 1.8 | 1.1 | 0.8 |

Example 4. Evaluation of sensory properties

The jam samples of Reference Experimental Example 3 and Comparative Example 1 in which allulose and sucrose were added in the same amount were evaluated per item after 24 hours from the completion time point of preparation of the jams by 16 trained male and female panelists in their 20s and 50s, and sensory qualities were compared to each other.

Specifically, each panelist freely applied each jam to bread (commercially available product), ate, and then expressed given properties (spreadability, stickiness, mouth feeling preference, overall preference) according to a 9-point scale. The quantified scores for each property were again converted to a 5-point scale (intensity: 1 point - very weak to 5 points - very strong, preference: 1 point - very poor to 5 points - very good), and the scores for each property were analyzed according to the T-test between the two samples, and statistical significant difference was shown ($p < 0.05$).

As a result, it was confirmed that Reference Experimental Example 3 had excellent spreadability and low stickiness, and thus, showed the same tendency as the spreadability result analyzed by using the food texture analyzer. Reference Experimental Example 3 also showed a relatively good tendency ($p < 0.1$) in the mouth feeling preference, and no significant difference in the overall preference as compared to the Comparative Example (Table 7).

[Table 7]

| Properties | Comparative Example 1 | Reference Experimental Example 3 | *p* value |
|---|---|---|---|
| Spreadability | 2.92±0.58 | 4.22±0.41 | 0.00 |
| Stickiness | 3.45±0.73 | 2.34±0.68 | 0.00 |
| Mouth feeling preference | 3.53±0.56 | 3.81±0.62 | 0.09 |
| Overall preference | 3.67±0.65 | 3.41±0.71 | 0.32 |

Example 5. Storage stability

Storage stability of the prepared jams was confirmed by moisture change within the storage period. In foods having a gel network structure such as a jam, a dispersion medium (mainly water) contained in the gel is separated from the gel during storage and distribution, and the separated dispersion medium promotes microbial contamination and proliferation, resulting in deterioration of quality or increased risk of human body. Therefore, the storage stability is able to be improved when the moisture change is reduced.

Specifically, the moisture change during storage was determined by measuring the moisture content immediately after the preparation of the jam, and by confirming the change in the moisture content generated during the storage under the dehumidification condition. That is, the jam samples of Reference Examples 1 to 3 and Examples 4 and 5 and Comparative Example 1 were stored in an open state at 20% RH (relative humidity) condition, and some of the samples were taken after 3 days, 7 days, 16 days and 30 days. The moisture content was measured by an atmospheric pressure thermal drying method. 5 g of each of the collected samples were widely applied to a container of which a content was confirmed, and then an amount of reduced moisture was measured by drying at 100 to 103°C under atmospheric pressure.

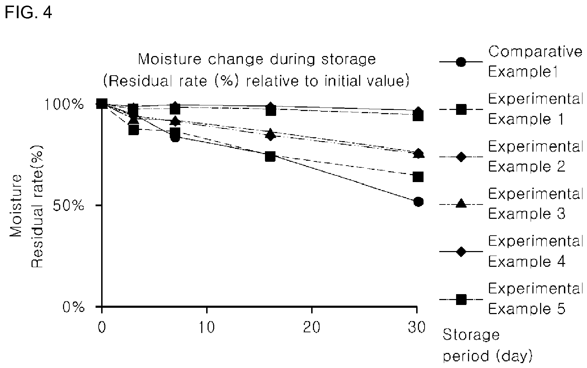

As a result, in Comparative Example 1, it was confirmed that the moisture was continuously lost during storage, and after 30 days, 52.1% of the moisture remained as compared to the initial value. Whereas in Reference Experimental Examples 1 to 3 and Experimental Examples 4 and 5, it was confirmed that 64.5% to 94.5% of the moisture remained, and thus, the moisture residual rate was significantly higher than that of Comparative Example (Table 8, FIG. 4). Reference Experimental Example 3 prepared by adding the same amount of allulose as the sucrose of Comparative Example 1 showed that the moisture residual rate after 30 days was 76%, and a moisture retention force was about 1.46 times or more excellent as compared to Comparative Example 1. Even in Experimental Examples 4 to 5 in which the added amount of allulose was increased, about 94% to 97% or more of moisture remained even after 30 days, and thus, it was confirmed that the addition of allulose reduced the moisture change of the jam.

[Table 8]

| Classification | Moisture content immediately after preparation | Moisture residual rate according to storage period | | | | |
|---|---|---|---|---|---|---|
| | | 0 Day | 3 Day | 7 Day | 16 Day | 30 Day |
| Comparative Example 1 | 20.0% | 100.0% | 94.9% | 83.6% | 74.6% | 52.1% |
| Reference Experimental Example 1 | 44.9% | 100.0% | 87.5% | 86.3% | 74.6% | 64.5% |
| Reference Experimental Example 2 | 34.6% | 100.0% | 94.3% | 91.5% | 84.2% | 75.5% |
| Reference Experimental Example 3 | 26.8% | 100.0% | 92.9% | 92.5% | 86.2% | 76.0% |
| Experimental Example 4 | 22.2% | 100.0% | 98.5% | 99.0% | 98.6% | 96.6% |
| Experimental Example 5 | 19.5% | 100.0% | 97.4% | 97.7% | 97.0% | 94.5% |

The above examples described herein are exemplified from every aspect, and should not be interpreted as limiting the scope of the present invention. Accordingly, the scope of the present invention should be defined by the claims appended hereto.

**Claims**

1.    A fruit jam comprising a fruit and a saccharide containing allulose,
wherein the allulose has an amount of 200 to 300 parts by weight based on 100 parts by weight of the fruit.

2.    The fruit jam of claim 1, wherein the allulose has an amount of 50 to 100 parts by weight based on 100 parts by weight of the saccharide.

3.    The fruit jam of claim 1, wherein the fruit jam does not include sucrose.

4.    The fruit jam of claim 1, wherein the fruit jam has a hardness of 10 to 80 gf.

5.    The fruit jam of claim 1, wherein the fruit jam has a spreadability of 0.5 to 3.0 △g/△sec.

6.    A method for preparing a fruit jam comprising:

(a) contacting a fruit with a saccharide containing allulose; and
(b) heating the product of step (a),

wherein the allulose has an amount of 200 to 300 parts by weight based on 100 parts by weight of the fruit at step (a).

7.    The method of claim 6, wherein the method does not include contacting the fruit with sucrose.

8.    A method for reducing bubbles of a fruit jam comprising:

(a) contacting a fruit with a saccharide containing allulose; and

(b) heating the product of step (a);

wherein the allulose has an amount of 200 to 300 parts by weight based on 100 parts by weight of the fruit at step (a).

**Patentansprüche**

1. Fruchtkonfitüre, umfassend eine Frucht und ein Allulose enthaltendes Saccharid, wobei die Allulose eine Menge von 200 bis 300 Gewichtsteilen bezogen auf 100 Gewichtsteile der Frucht aufweist.

2. Fruchtkonfitüre nach Anspruch 1, wobei die Allulose eine Menge von 50 bis 100 Gewichtsteilen bezogen auf 100 Gewichtsteile des Saccharids aufweist.

3. Fruchtkonfitüre nach Anspruch 1, wobei die Fruchtkonfitüre keine Saccharose beinhaltet.

4. Fruchtkonfitüre nach Anspruch 1, wobei die Fruchtkonfitüre eine Härte von 10 bis 80 gf aufweist.

5. Fruchtkonfitüre nach Anspruch 1, wobei die Fruchtkonfitüre eine Streichfähigkeit von 0,5 bis 3,0 $\Delta g/\Delta s$ aufweist.

6. Verfahren zur Herstellung einer Fruchtkonfitüre, umfassend:

   (a) Zusammenbringen einer Frucht mit einem Allulose enthaltenden Saccharid; und
   (b) Erhitzen des Produkts von Schritt (a),

   wobei die Allulose eine Menge von 200 bis 300 Gewichtsteilen bezogen auf 100 Gewichtsteile der Frucht in Schritt (a) aufweist.

7. Verfahren nach Anspruch 6, wobei das Verfahren kein Zusammenbringen der Frucht mit Saccharose beinhaltet.

8. Verfahren zur Verringerung von Blasen einer Fruchtkonfitüre, umfassend:

   (a) Zusammenbringen einer Frucht mit einem Allulose enthaltenden Saccharid; und
   (b) Erhitzen des Produkts von Schritt (a);

   wobei die Allulose eine Menge von 200 bis 300 Gewichtsteilen bezogen auf 100 Gewichtsteile der Frucht in Schritt (a) aufweist.

**Revendications**

1. Confiture de fruit comprenant un fruit et un saccharide contenant de l'allulose, dans laquelle l'allulose a une quantité de 200 à 300 parties en poids sur la base de 100 parties en poids du fruit.

2. Confiture de fruit selon la revendication 1, dans laquelle l'allulose a une quantité de 50 à 100 parties en poids sur la base de 100 parties en poids du saccharide.

3. Confiture de fruit selon la revendication 1, où la confiture de fruit ne comprend pas de saccharose.

4. Confiture de fruit selon la revendication 1, où la confiture de fruit a une dureté de 10 à 80 gf.

5. Confiture de fruit selon la revendication 1, où la confiture de fruit a une aptitude à l'étalement de 0,5 à 3,0 $\underline{\Delta}g/\Delta$sec.

6. Procédé de préparation d'une confiture de fruit, comprenant :

   (a) mettre un fruit en contact avec un saccharide contenant de l'allulose ; et
   (b) chauffer le produit de l'étape (a),

dans lequel l'allulose a une quantité de 200 à 300 parties en poids sur la base de 100 parties en poids du fruit à l'étape (a).

7. Procédé selon la revendication 6, où le procédé ne comprend pas mettre le fruit en contact avec du saccharose.

8. Procédé de réduction de bulles d'une confiture de fruit, comprenant :

(a) mettre un fruit en contact avec un saccharide contenant de l'allulose ; et
(b) chauffer le produit de l'étape (a),

dans lequel l'allulose a une quantité de 200 à 300 parties en poids sur la base de 100 parties en poids du fruit à l'étape (a).

FIG. 1

FIG. 2

FIG. 3

FIG. 4

Moisture change during storage
(Residual rate (%) relative to initial value)

**EP 3 508 073 B1**

**Patent documents cited in the description**

- KR 1020160112501
- KR 100735865 B1
- WO 2015075473 A
- JP 2014113059 B